# EUROPEAN PATENT SPECIFICATION

(11) **EP 4 458 588 B1**
(45) Date of publication and mention of the grant of the patent: **23.07.2025**
(21) Application number: 24165851.7
(22) Date of filing: 25.03.2024
(51) Int. Cl.: B60C 11/03, B60C 11/13

(54) **HEAVY DUTY TIRE**
SCHWERLASTREIFEN
PNEU POUR POIDS LOURDS

(30) Priority: 01.05.2023 JP 2023075749
(43) Date of publication of application: 06.11.2024
(73) Proprietor: Sumitomo Rubber Industries, Ltd., Kobe-shi, Hyogo-ken 651-0072 (JP)
(72) Inventor: ISHIKURA, MARIE, Hyogo, 651-0072 (JP)
(74) Representative: Manitz Finsterwald Patent- und Rechtsanwaltspartnerschaft mbB

(56) References cited:
- EP-A1- 4 119 358
- EP-A1- 4 364 972
- DE-A1- 102020 214 281
- FR-A- 1 584 734

## Description

### BACKGROUND OF THE INVENTION

### Field of the Invention

The present invention relates to a heavy duty tire.

### Background Art

The tread of a tire has a plurality of circumferential main grooves aligned in the axial direction. The plurality of circumferential main grooves form a plurality of land portions in the tread.

Each land portion deforms when coming into contact with a road surface. The deformation of the land portion influences the rolling resistance of the tire. Environmental impact is taken into consideration, and there is a strong need for tires to reduce rolling resistance.

By providing each circumferential main groove with a body portion having a narrow groove width, the land portions can support each other when the tread comes into contact with a road surface, thereby suppressing deformation of the land portions.

In order to reduce the rolling resistance of a tire, the adoption of circumferential main grooves each having a body portion, that is, circumferential narrow grooves, is considered (e.g., Japanese Laid-Open Patent Publication No. 2017-094891).

The circumferential narrow grooves also influence, for example, running performance on a wet road surface (hereinafter referred to as wet performance). In consideration of influence on various performances, the circumferential narrow grooves have been improved. Related technologies are known from FR 1 584 734 A2, EP 4119 358 A1, DE 10 2020 214281 A1, and EP 4 364 972 A1.

An object of the present invention is to provide a heavy duty tire that can achieve reduction of the risk of damage to each land portion edge and improvement of wet performance while suppressing an increase in rolling resistance and a decrease in wear resistance.

### SUMMARY OF THE INVENTION

A heavy duty tire according to the present invention includes a tread having a tread surface configured to come into contact with a road surface, as set out in the appended claims. The tread has a plurality of circumferential main grooves. The plurality of circumferential main grooves form a plurality of land portions aligned in an axial direction in the tread. The plurality of circumferential main grooves include a circumferential narrow groove. The circumferential narrow groove includes a body portion, a tapered portion located outward of the body portion and including a groove opening of the circumferential narrow groove, and a widened portion located inward of the body portion and including a groove bottom of the circumferential narrow groove. The body portion extends straight. A pair of wall surfaces of the circumferential narrow groove come into contact with each other at the body portion when the tread comes into contact with a road surface. The tapered portion is tapered from the groove opening toward the body portion. The widened portion has a groove width wider than a groove width of the body portion and is tapered from a position at which the widened portion has a maximum groove width toward the body portion. In a contour line of the circumferential narrow groove in a meridian cross-section of the tire, when a portion transitioning from the tapered portion to the body portion is defined as an outer transition portion, and a portion transitioning from the body portion to the widened portion is defined as an inner transition portion, the outer transition portion is represented by an arc tangent to both a contour line of the tapered portion and a contour line of the body portion, and the inner transition portion is represented by an arc tangent to the contour line of the body portion and a contour line of the widened portion. A radius of the arc representing the inner transition portion is larger than a radius of the arc representing the outer transition portion.

According to the present invention, a heavy duty tire that can achieve reduction of the risk of damage to each land portion edge and improvement of wet performance while suppressing an increase in rolling resistance and a decrease in wear resistance, is obtained.

### BRIEF DESCRIPTION OF THE DRAWINGS

FIG. 1 is a development view showing a tread of a heavy duty tire according to one embodiment of the present invention;
FIG. 2 illustrates a groove provided on the tread;
FIG. 3 is a cross-sectional view showing a part of a cross-section taken along a line III-III in FIG. 1;
FIG. 4 is a cross-sectional view showing a part of a cross-section taken along a line IV-IV in FIG. 1; and
FIG. 5 is a cross-sectional view showing a part of a cross-section taken along a line V-V in FIG. 1.

### DETAILED DESCRIPTION

Hereinafter, the present invention will be described in detail based on preferred embodiments with appropriate reference to the drawings.

The tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is also referred to as standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

### [Findings on Which Present Invention Is Based]

According to thorough studies by the present inventor, the following circumstances have become clear regarding the technology for reducing the rolling resistance of a tire.

As described above, by providing circumferential narrow grooves on a tread, deformation of land portions is suppressed when the tread comes into contact with a road surface, and the apparent stiffness of the land portions is increased. The tire can have reduced rolling resistance and can have improved wear resistance.

By further providing a widened portion having a wider groove width than a body portion on the inner side of the body portion, the widened portion can contribute to improving wet performance after the body portion disappears due to wear.

By adopting circumferential narrow grooves each having a body portion and a widened portion, it is expected that the tire can have improved wet performance while suppressing an increase in rolling resistance and a decrease in wear resistance.

Meanwhile, when a lateral force is applied to the tire, such as during cornering, stress is concentrated on the groove opening of each circumferential narrow groove, that is, the edge of each land portion. Depending on the degree of stress concentration, damage such as chipping or tearing-off of the edge of the land portion may occur.

In anticipation of such a situation, measures are taken such as providing a tapered portion at the groove opening of each circumferential narrow groove. However, the tread is worn. Accordingly, the tapered portion, the body portion, and the widened portion are exposed on the tread surface in this order.

The present inventor has examined the relationship between the change in the shape of each land portion edge due to wear and the risk of damage such as chipping and tearing-off. As a result, the present inventor has found that the risk of damage increases at the timing of switching from the tapered portion to the body portion and the timing of switching from the body portion to the widened portion, leading to completion of the invention described below.

### [Outline of Embodiments of Present Invention]

### [Configuration 1]

A heavy duty tire according to an aspect of the present invention is a tire including a tread having a tread surface configured to come into contact with a road surface, wherein: the tread has a plurality of circumferential main grooves; the plurality of circumferential main grooves form a plurality of land portions aligned in an axial direction in the tread; the plurality of circumferential main grooves include a circumferential narrow groove; the circumferential narrow groove includes a body portion, a tapered portion located outward of the body portion and including a groove opening of the circumferential narrow groove, and a widened portion located inward of the body portion and including a groove bottom of the circumferential narrow groove; the body portion extends straight; a pair of wall surfaces of the circumferential narrow groove come into contact with each other at the body portion when the tread comes into contact with a road surface; the tapered portion is tapered from the groove opening toward the body portion; the widened portion has a groove width wider than a groove width of the body portion and is tapered from a position at which the widened portion has a maximum groove width toward the body portion; in a contour line of the circumferential narrow groove in a meridian cross-section of the tire, when a portion transitioning from the tapered portion to the body portion is defined as an outer transition portion, and a portion transitioning from the body portion to the widened portion is defined as an inner transition portion, the outer transition portion is represented by an arc tangent to both a contour line of the tapered portion and a contour line of the body portion, and the inner transition portion is represented by an arc tangent to the contour line of the body portion and a contour line of the widened portion; and a radius of the arc representing the inner transition portion is larger than a radius of the arc representing the outer transition portion.

By forming the tire as described above, the tire can achieve reduction of the risk of damage to each land portion edge and improvement of wet performance while suppressing an increase in rolling resistance and a decrease in wear resistance.

### [Configuration 2]

In the heavy duty tire described in [Configuration 1] above, the radius of the arc representing the inner transition portion is larger than the maximum groove width of the widened portion.

### [Configuration 3]

In the heavy duty tire described in [Configuration 2] above, a portion, of the widened portion, including the groove bottom and the position at which the widened portion has the maximum groove width is a groove bottom portion, the groove bottom portion is represented by an arc in the contour line of the circumferential narrow groove in the meridian cross-section of the tire, and the radius of the arc representing the inner transition portion is not less than three times a radius of the arc representing the groove bottom portion.

### [Configuration 4]

Preferably, in the heavy duty tire described in any one of [Configuration 1] to [Configuration 3] above, a ratio of the groove width of the body portion to the maximum groove width of the widened portion is not less than 0.1 and not greater than 0.4.

### [Configuration 5]

Preferably, in the heavy duty tire described in any one of [Configuration 1] to [Configuration 4] above, a ratio of a groove depth from the groove opening to the position at which the widened portion has the maximum groove width, to a groove depth of the circumferential narrow groove, is not less than 0.6 and not greater than 0.9.

### [Configuration 6]

Preferably, in the heavy duty tire described in any one of [Configuration 1] to [Configuration 5] above, a ratio of a groove depth of the tapered portion to the groove depth of the circumferential narrow groove is not less than 0.05 and not greater than 0.3.

### [Configuration 7]

Preferably, in the heavy duty tire described in any one of [Configuration 1] to [Configuration 6] above, among the plurality of land portions, a land portion including an equator or a land portion closest to the equator is a crown land portion, and a land portion closest to the crown land portion is a middle land portion; among the plurality of circumferential main grooves, a circumferential main groove located between a middle land portion on a first end side of the tread surface and a middle land portion on a second end side of the tread surface is the circumferential narrow groove; the tapered portion of the circumferential narrow groove includes wide portions at which the groove opening is wide and narrow portions at which the groove opening is narrow; and the wide portions and the narrow portions are arranged alternately in a circumferential direction.

### [Configuration 8]

Preferably, in the heavy duty tire described in [Configuration 7] above, in two adjacent circumferential narrow grooves, the wide portions of the circumferential narrow groove on the first end side of the tread surface overlaps the narrow portions of the circumferential narrow groove on the second end side of the tread surface in the axial direction.

### [Configuration 9]

Preferably, in the heavy duty tire described in any one of [Configuration 1] to [Configuration 8] above, a ratio of the radius of the arc representing the inner transition portion to the radius of the arc representing the outer transition portion is not less than 2.0 and not greater than 20.0.

### [Configuration 10]

In the heavy duty tire described in any one of [Configuration 3] to [Configuration 9] above, the radius of the arc representing the inner transition portion is not less than 5 times and not greater than 20 times the radius of the arc representing the groove bottom portion.

### [Configuration 11]

Preferably, in the heavy duty tire described in any one of [Configuration 7] to [Configuration 10] above, a ratio of a radius of an arc representing a contour of the outer transition portion as a portion transitioning from the wide portion to the body portion, to a radius of an arc representing a contour of the outer transition portion as a portion transitioning from the narrow portion to the body portion, is not less than 0.95 and not greater than 1.05.

### [Configuration 12]

Preferably, in the heavy duty tire described in any one of [Configuration 7] to [Configuration 11] above, a ratio of a groove width of the narrow portion to a groove width of the wide portion is not less than 0.3 and not greater than 0.7.

### [Details of Embodiments of Present Invention]

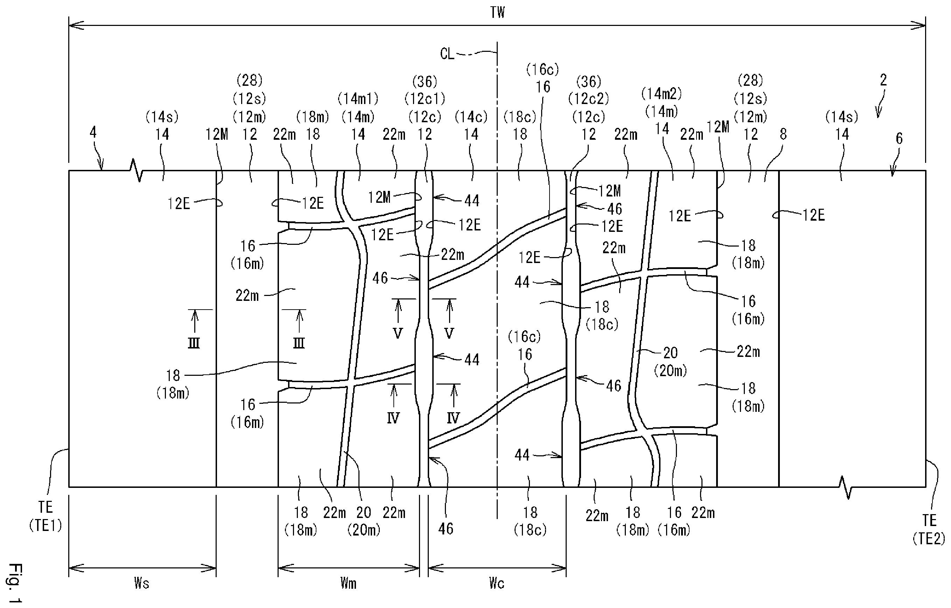

FIG. 1 shows a part of a tire 2 according to one embodiment of the present invention. The tire 2 is mounted to a vehicle such as a truck and a bus. The tire 2 is a heavy duty tire.

In FIG. 1, the right-left direction is the axial direction of the tire 2, and the up-down direction is the circumferential direction of the tire 2. The direction perpendicular to the surface of the drawing sheet of FIG. 1 is the radial direction of the tire 2. In FIG. 1, an alternate long and short dash line CL extending in the circumferential direction represents the equator plane of the tire 2.

FIG. 1 shows a tread 4. The tire 2 includes the tread 4. The tread 4 is included in a tread portion of the tire 2. The tread 4 is formed from a crosslinked rubber.

The tread 4 comes into contact with a road surface at a tread surface 6 thereof. The tread 4 has the tread surface 6 which comes into contact with a road surface. A line of intersection of the tread surface 6 and the equator plane CL is an equator.

In this specification, the tread surface 6 means the tread surface of an unused tire 2 with no running history, unless otherwise specified.

FIG. 1 is a development view of the tread surface 6. In FIG. 1, each position indicated by reference character TE is an end of the tread surface 6. In the tread surface 6 shown in FIG. 1, the end TE of the tread surface 6 located on the left side of the equator plane CL is a first end TE1, and the end TE of the tread surface 6 located on the right side of the equator plane CL is a second end TE2. In FIG. 1, a length indicated by reference character TW is the width of the tread surface 6. The width TW of the tread surface 6 is the distance in the axial direction from the first end TE1 to the second end TE2.

In the present invention, if the ends TE of the tread surface 6 cannot be identified as clear edges in appearance, positions, on the tread surface 6, corresponding to the axially outer ends (also referred to as ground-contact ends) of a ground-contact surface are specified as the ends TE of the tread surface 6. The ground-contact surface is obtained when a load equivalent to a standardized load of the tire 2 is applied to the tire 2 and the tire 2 is brought into contact with a road surface composed of a flat surface in a state where the camber angle of the tire 2 in a standardized state is set to 0°.

Grooves 8 are formed on the tread 4. Accordingly, a tread pattern is formed. FIG. 1 shows the tread pattern of the tire 2. The portion of the tread surface 6 other than the grooves 8 is also referred to as land surface 10.

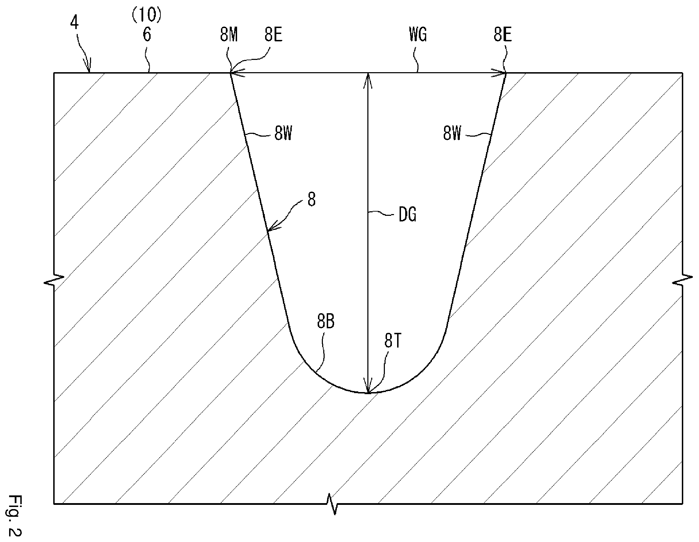

FIG. 2 shows an example of the groove 8 formed on the tread 4. FIG. 2 shows a cross-section of the groove 8. The main configuration of the groove 8 will be described on the basis of FIG. 2. In FIG. 2, the upper side of the drawing sheet corresponds to the radially outer side of the tire 2, and the lower side of the drawing sheet corresponds to the radially inner side of the tire 2.

The groove 8 has a pair of wall surfaces 8W including a groove opening 8M, and a bottom surface 8B including a groove bottom 8T. The pair of wall surfaces 8W each extend between the groove opening 8M and the bottom surface 8B.

The groove width of the groove 8 is represented as the distance between a first wall surface 8W and a second wall surface 8W which are the pair of wall surfaces 8W, that is, the inter-wall surface distance.

In FIG. 2, a length indicated by a double-headed arrow WG is the groove width of the groove 8 at the groove opening 8M. The groove width WG is represented as the shortest distance from a first edge 8E to a second edge 8E which are a pair of edges 8E forming the groove opening 8M.

In the case where each edge 8E of the groove opening 8M is chamfered and the groove opening 8M of the groove 8 is tapered, unless otherwise specified, the groove width WG of the groove opening 8M is obtained with the point of intersection of an extension line of the contour line of each wall surface 8W and an extension line of the contour line of the land surface 10 being defined as a virtual edge.

A length indicated by a double-headed arrow DG is the groove depth of the groove 8. The groove depth DG of the groove 8 is represented as the shortest distance from a line segment connecting the left and right edges 8E to the groove bottom 8T of the groove 8. The line segment DG representing the groove depth is included in a normal line that passes through the groove bottom 8T and is normal to the line segment connecting the left and right edges 8E. The direction of this normal line is the depth direction of the groove 8.

The position, the groove width WG, the groove depth DG, etc., of the groove 8 are determined as appropriate according to the specifications of the tire 2.

The groove bottom 8T is at the deepest position in the cross-section of the groove 8. Along a normal line of the line segment connecting the left and right edges 8E forming the groove opening 8M, the distance from this line segment to the bottom surface 8B is measured. The location where the distance from this line segment to the bottom surface 8B becomes maximum is the groove bottom 8T.

The bottom surface 8B shown in FIG. 2 is a curved surface. The bottom surface 8B may include a flat surface, and this flat surface may include the groove bottom 8T. In this case, the width center of the flat surface is used as the groove bottom 8T.

Grooves 8 each having a groove width WG of less than 1.0 mm at the groove opening 8M thereof are also referred to as sipes. The grooves 8 other than the sipes are also referred to normal grooves, and each have a groove width WG of not less than 1.0 mm at the groove opening 8M thereof.

Each sipe may include a portion having a groove width of not less than 1.0 mm (hereinafter referred to as normal groove equivalent portion) between the groove opening 8M and the groove bottom 8T. In this case, when the tread 4 is worn and the normal groove equivalent portion is exposed, the sipe is switched to a normal groove.

Each normal groove may include a portion having a groove width of less than 1.0 mm (sipe equivalent portion) between the groove opening 8M and the groove bottom 8T. In this case, when the tread 4 is worn and the sipe equivalent portion is exposed, the normal groove is switched to a sipe.

The tread pattern of the tire 2 includes a circumferential main groove 12. The circumferential main groove 12 is the above-described normal groove. The circumferential main groove 12 continuously extends in the circumferential direction and has a groove depth of not less than 10 mm.

The tread 4 of the tire 2 has a plurality of circumferential main grooves 12. Accordingly, a plurality of land portions 14 are formed in the tread 4 so as to be aligned in the axial direction. The plurality of circumferential main grooves 12 form the plurality of land portions 14 in the tread 4.

The plurality of circumferential main grooves 12 are formed on the tread 4 of the tire 2, and the number of circumferential main grooves 12 formed in a zone from the equator to the first end TE1 of the tread surface 6 (hereinafter also referred to as first zone) is equal to the number of circumferential main grooves 12 formed in a zone from the equator to the second end TE2 (hereinafter also referred to as second zone). In other words, the same number of circumferential main grooves 12 are arranged in each of the first zone and the second zone. The same number of land portions 14 are formed in each of the first zone and the second zone.

Four circumferential main grooves 12 are formed on the tread 4 shown in FIG. 1. Accordingly, five land portions 14 are formed in the tread 4 so as to be aligned in the axial direction. The four circumferential main grooves 12 divide the tread 4 (specifically, a portion of the tread 4 including the tread surface 6) into five land portions 14.

Among the four circumferential main grooves 12, the circumferential main groove 12 closest to the equator is a center circumferential main groove 12c. The center circumferential main groove 12c extends straight in the circumferential direction. The circumferential main groove 12 closest to the center circumferential main groove 12c is a middle circumferential main groove 12m. The middle circumferential main groove 12m also extends straight in the circumferential direction.

The tread 4 shown in FIG. 1 includes a pair of the center circumferential main grooves 12c, and a pair of the middle circumferential main grooves 12m located axially outward of the center circumferential main grooves 12c.

In the case where five or more circumferential main grooves 12 which are not shown are formed on the tread 4 and the tread 4 has a circumferential main groove 12 including the equator, the circumferential main groove 12 including the equator is a center circumferential main groove 12c.

The circumferential main groove 12 located on each outermost side in the axial direction is also referred to as shoulder circumferential main groove 12s. The middle circumferential main grooves 12m of the tread 4 shown in FIG. 1 are also the shoulder circumferential main grooves 12s.

Among the five land portions 14, the land portion 14 including the equator is a crown land portion 14 c. The land portion 14 closest to the crown land portion 14c is a middle land portion 14m. The middle land portion 14m is the land portion 14 closest to the equator after the crown land portion 14c.

As shown in FIG. 1, the land portion 14 located axially outward of the middle land portion 14m is the land portion 14 located on the outermost side in the axial direction, and includes the end TE of the tread surface 6. In the tire 2, the land portion 14 including the end TE of the tread surface 6 is a shoulder land portion 14s.

Although not shown, six or more circumferential main grooves 12 are formed on the tread 4, and one or more land portions 14 may be provided between the middle land portion 14m and the shoulder land portion 14s.

The circumferential main groove 12 closest to the shoulder land portion 14s is the above-described shoulder circumferential main groove 12s.

The tread 4 shown in FIG. 1 includes the crown land portion 14c, a pair of the middle land portions 14m located axially outward of the crown land portion 14c, and a pair of the shoulder land portions 14s located axially outward of the middle land portions 14m.

In the case where the tread 4 has a circumferential main groove 12 including the equator, the land portion 14 closest to the equator is the crown land portion 14c.

The top surface of each land portion 14, that is, the land surface 10, forms a part of the tread surface 6. A pair of edges 12E forming a groove opening 12M of each circumferential main groove 12 are each the boundary between the land surface 10 and the circumferential main groove 12. Each edge 12E is also the edge of the land portion 14.

The width of the land portion 14 is represented as the distance in the axial direction from the edge 12E on the first end TE1 side to the edge 12E on the second end TE2 of the land portion 14. The width of each shoulder land portion 14s including the end TE of the tread surface 6 is represented as the distance in the axial direction from the end TE of the tread surface 6 to the edge 12E on the equator side of the shoulder land portion 14s. In the case where the width of the land portion 14 varies in the circumferential direction, the width of the land portion 14 is represented using the maximum width.

In FIG. 1, a length indicated by reference character Wc is the width of the crown land portion 14c. A length indicated by reference character Wm is the width of the middle land portion 14m. A length indicated by reference character Ws is the width of the shoulder land portion 14s.

The width of each land portion 14 is determined as appropriate in consideration of grip performance and wet performance. In the tread 4 shown in FIG. 1, the ratio (Wc/TW) of the width Wc of the crown land portion 14c to the width TW of the tread surface 6 is preferably not less than 0.10 and not greater than 0.20. The ratio (Wm/TW) of the width Wm of the middle land portion 14m to the width TW of the tread surface 6 is preferably not less than 0.10 and not greater than 0.20. The ratio (Ws/TW) of the width Ws of the shoulder land portion 14s to the width TW of the tread surface 6 is preferably not less than 0.10 and not greater than 0.25.

In the tread 4 shown in FIG. 1, lateral grooves 16 are formed on the crown land portion 14c and the middle land portions 14m. The groove width of each lateral groove 16 is not less than 0.5 mm and not greater than 3.5 mm. The lateral groove 16 is shallower than the circumferential main groove 12. The ratio of the groove depth of the lateral groove 16 to the groove depth of the circumferential main groove 12 is preferably not less than 0.12 and not greater than 0.32.

A crown lateral groove 16c is formed on the crown land portion 14c. The crown lateral groove 16c traverses the crown land portion 14c. The crown lateral groove 16c extends between the center circumferential main groove 12c on the first end TE1 side (hereinafter also referred to as first center circumferential main groove 12c1) and the center circumferential main groove 12c on the second end TE2 side (hereinafter also referred to as second center circumferential main groove 12c2).

By forming a plurality of crown lateral grooves 16c on the crown land portion 14c, a plurality of blocks 18 (hereinafter also referred to as crown blocks 18c) are formed so as to be aligned in the circumferential direction.

Although not described in detail, the pitch of the crown lateral grooves 16c on the crown land portion 14c is set as appropriate according to the specifications of the tire 2.

A plurality of middle lateral grooves 16m are formed on each middle land portion 14m.

Each middle lateral groove 16m traverses the middle land portion 14m. The middle lateral groove 16m extends between the center circumferential main groove 12c and the middle circumferential main groove 12m.

The middle lateral groove 16m has the same groove depth as that of the crown lateral groove 16c. The middle lateral groove 16m may be shallower or deeper than the crown lateral groove 16c.

By forming the plurality of middle lateral grooves 16m on each middle land portion 14m, a plurality of blocks 18 (hereinafter also referred to as middle blocks 18m) are formed so as to be aligned in the circumferential direction.

The pitch of the middle lateral grooves 16m on the middle land portion 14m is the same as the pitch of the crown lateral grooves 16c on the crown land portion 14c.

In addition to the middle lateral grooves 16m, each middle land portion 14m has a longitudinal groove 20 (hereinafter also referred to as middle longitudinal groove 20m). The middle land portion 14m has the middle lateral grooves 16m and the middle longitudinal groove 20m. The middle longitudinal groove 20m traverses the middle land portion 14m. The middle longitudinal groove 20m continuously extends in the circumferential direction. The groove width of the middle longitudinal groove 20m is not less than 1.0 mm and not greater than 4.0 mm. The middle longitudinal groove 20m is shallower than the circumferential main groove 12. The ratio of the groove depth of the middle longitudinal groove 20m to the groove depth of the circumferential main groove 12 is preferably not less than 0.12 and not greater than 0.32.

As described above, each middle land portion 14m includes the plurality of middle blocks 18m. The middle longitudinal groove 20m forms two sub-middle blocks 22m in the middle block 18m.

As shown in FIG. 1, unlike the crown land portion 14c and each middle land portion 14m, no lateral groove 16 is formed on each shoulder land portion 14s. A plurality of lateral grooves 16 may be formed on each shoulder land portion 14s. Unlike each middle land portion 14m, no longitudinal groove 20 is formed on each shoulder land portion 14s. A longitudinal groove 20 may be formed on each shoulder land portion 14s.

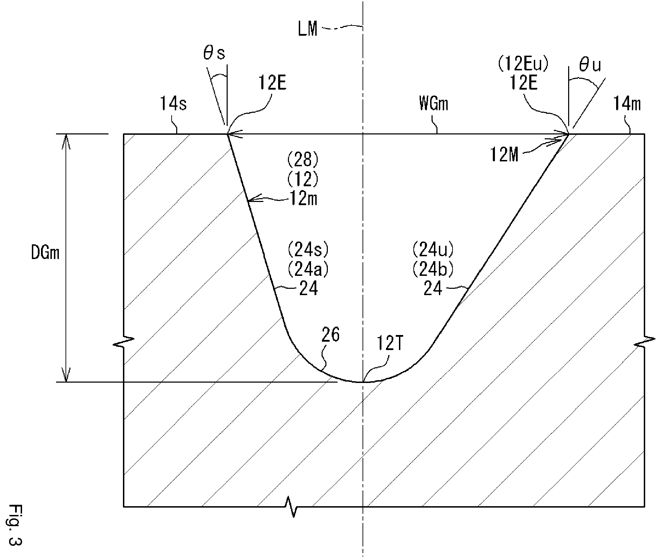

FIG. 3 is a cross-sectional view of the middle circumferential main groove 12m taken along a line III-III in FIG. 1. In FIG. 1, the line III-III extends in the axial direction. The line III-III is included in a cross-section (hereinafter referred to as meridian cross-section) of the tire 2 along a plane including the rotation axis of the tire 2. FIG. 3 shows a cross-sectional shape of the middle circumferential main groove 12m in the meridian cross-section of the tire 2.

In FIG. 3, the left side of the drawing sheet is the end TE side of the tread surface 6 (specifically, the first end TE1 side of the tread surface 6). The configuration of the circumferential main groove 12 will be described using the cross-section of the middle circumferential main groove 12m.

The circumferential main groove 12 includes a pair of wall surfaces 24 including a groove opening 12M, and a bottom surface 26 including a groove bottom 12T. The pair of wall surfaces 24 each extend between the groove opening 12M and the bottom surface 26.

Of the pair of wall surfaces 24, the wall surface 24 on the first end TE1 side of the tread surface 6 is also referred to as first wall surface 24a, and the wall surface 24 on the second end TE2 side of the tread surface 6 is also referred to as second wall surface 24b.

The entire middle circumferential main groove 12m shown in FIG. 3 is located in the first zone. The first wall surface 24a on the end TE side of the tread surface 6 is also referred to as outer wall surface 24s, and the second wall surface 24b is also referred to as inner wall surface 24u. In the case where the entire circumferential main groove 12 is located in the second zone, the first wall surface 24a is the inner wall surface 24u, and the second wall surface 24b is the outer wall surface 24s.

In the present invention, among the circumferential main grooves 12, a groove whose pair of wall surfaces 24 do not come into contact with each other even when the tread 4 comes into contact with a road surface is also referred to as circumferential wide groove.

The pair of wall surfaces 24 of the middle circumferential main groove 12m shown in FIG. 3 do not come into contact with each other even when the tread 4 comes into contact with a road surface. This middle circumferential main groove 12m is a circumferential wide groove 28.

In FIG. 3, a solid line LM is a normal line that passes through the groove bottom 12T and is normal to a line segment connecting the left and right edges 12E. The cross-sectional shape of the middle circumferential main groove 12m shown in FIG. 3 is asymmetrical with respect to the normal line LM.

A length indicated by a double-headed arrow WGm is the groove width at the groove opening 12M of the middle circumferential main groove 12m. A length indicated by a double-headed arrow DGm is the groove depth of the middle circumferential main groove 12m.

The groove width WGm of the middle circumferential main groove 12m is preferably, for example, not less than 4.0% and not greater than 10.0% of the width TW of the tread surface 6. The groove depth DGm of the middle circumferential main groove 12m is preferably, for example, not less than 10 mm and not greater than 21 mm. From the viewpoint that the tire 2 can exhibit good wet performance, the groove depth DGm is more preferably not less than 13 mm and not greater than 18 mm.

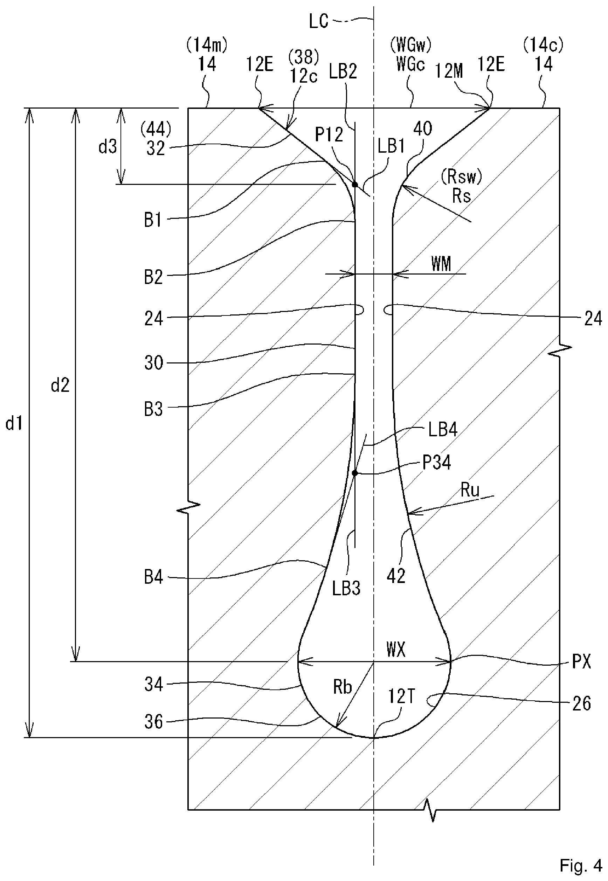

FIG. 4 is a cross-sectional view of the center circumferential main groove 12c taken along a line IV-IV in FIG. 1. In FIG. 1, the line IV-IV extends in the axial direction. The IV-IV line is included in the meridian cross-section. FIG. 4 shows a cross-sectional shape of the center circumferential main groove 12c in the meridian cross-section of the tire 2.

In FIG. 4, the left side of the drawing sheet is the end TE side of the tread surface 6 (specifically, the first end TE1 side of the tread surface 6). The right side of the drawing sheet is the equator plane CL side, and is also the second end TE2 side of the tread surface 6.

In FIG. 4, a solid line LC is a normal line that passes through the groove bottom 12T and is normal to a line segment connecting the left and right edges 12E. The cross-sectional shape of the center circumferential main groove 12c shown in FIG. 4 is symmetrical with respect to the normal line LC.

The center circumferential main groove 12c includes a body portion 30, a tapered portion 32, and a widened portion 34.

The body portion 30 extends straight in the depth direction of the center circumferential main groove 12c. In the cross-sectional shape of the center circumferential main groove 12c shown in FIG. 4, the contour of the body portion 30 is represented by a straight line. In FIG. 4, a length indicated by a double-headed arrow WM represents the groove width of the body portion 30.

The tapered portion 32 is located radially outward of the body portion 30. The tapered portion 32 includes a groove opening 12M. The tapered portion 32 is tapered from the groove opening 12M toward the body portion 30. The groove width of the tapered portion 32 at the groove opening 12M is wider than the groove width WM of the body portion 30.

In the cross-sectional shape of the center circumferential main groove 12c shown in FIG. 4, the contour of the tapered portion 32 is represented by a straight line. The contour of the tapered portion 32 may be represented by one or more arcs, or may be represented by a combination of a straight line and an arc.

The widened portion 34 is located radially inward of the body portion 30. The widened portion 34 includes a bottom surface 26. The widened portion 34 has a groove width wider than the groove width WM of the body portion 30. In FIG. 4, a length indicated by a double-headed arrow WX represents the maximum groove width of the widened portion 34. A position indicated by reference character PX is a position at which the widened portion 34 has the maximum groove width WX. The widened portion 34 is tapered from the position PX, at which the widened portion 34 has the maximum groove width WX, toward the body portion 30. The widened portion 34 is tapered from the position PX, at which the widened portion 34 has the maximum groove width WX, toward the groove bottom 12T.

A portion, of the widened portion 34, including the maximum groove width position PX and the groove bottom 12T is also referred to as groove bottom portion 36. The widened portion 34 includes the groove bottom portion 36, and the groove bottom portion 36 includes the above-described bottom surface 26.

In the cross-sectional shape of the center circumferential main groove 12c shown in FIG. 4, the contour of at least the groove bottom portion 36 of the widened portion 34 is represented by a single arc. In this case, the contour of the portion other than the groove bottom portion 36 is represented by a smooth line including a straight line or an arc. The contour of the entire widened portion 34 may be represented by a single arc.

The tapered portion 32 is provided at the groove opening 12M of the center circumferential main groove 12c, and the body portion 30 is provided inward of the tapered portion 32 so as to extend straight. The groove width at the groove opening 12M of the center circumferential main groove 12c is represented as the groove width WM of the body portion 30.

The center circumferential main groove 12c is not a sipe. The groove width WM of the body portion 30 is not less than 1.0 mm. The groove width WM is set such that the pair of wall surfaces 24 of the center circumferential main groove 12c can come into contact with each other when the tread 4 comes into contact with a road surface. That is, the pair of wall surfaces 24 of the center circumferential main groove 12c come into contact with each other at the body portion 30 when the tread 4 comes into contact with a road surface.

In the present invention, among the circumferential main grooves 12, a groove whose pair of wall surfaces 24 may come into contact with each other when the tread 4 comes into contact with a road surface is also referred to as circumferential narrow groove.

Each center circumferential main groove 12c is a circumferential narrow groove 38.

The plurality of circumferential main grooves 12 formed on the tread 4 of the tire 2 include the circumferential narrow groove 38. As described above, when the tread 4 comes into contact with a road surface, the pair of wall surfaces 24 of the circumferential narrow groove 38 come into contact with each other at the body portion 30.

In the tire 2, the land portions 14 can come into contact with each other to support each other when the tread 4 comes into contact with a road surface. Since deformation of the land portions 14 is suppressed, the tire 2 can have reduced rolling resistance and can have improved wear resistance.

The circumferential narrow groove 38 has the widened portion 34 on the inner side of the body portion 30. When the body portion 30 disappears due to wear, the widened portion 34 is exposed. Since the widened portion 34 has a groove width wider than the groove width WM of the body portion 30, the widened portion 34 can contribute to increasing the groove volume of the circumferential narrow groove 38. The circumferential narrow groove 38 having the widened portion 34 allows water existing between a road surface and the tread surface 6 to be effectively drained as compared to a circumferential narrow groove not having the widened portion 34. The apparent stiffness of the land portions 14 is increased due to wear, but the widened portion 34 suppresses a rapid increase in stiffness. Thus, even when the tread 4 is worn, the tire 2 can maintain good wet performance and low rolling resistance.

The tire 2 can have improved wet performance while suppressing an increase in rolling resistance and a decrease in wear resistance.

Meanwhile, as described above, the circumferential narrow groove 38 has the tapered portion 32, the body portion 30, and the widened portion 34 from the groove opening 12M toward the groove bottom 12T. The tapered portion 32, the body portion 30, and the widened portion 34 are exposed in this order due to wear.

The present inventor has examined the relationship between the change in the shape of each edge 12E of each land portion 14 due to wear and the risk of damage such as chipping and tearing-off. As a result, the present inventor has found that the risk of damage to each land portion edge increases at the timing of switching from the tapered portion 32 to the body portion 30 and the timing of switching from the body portion 30 to the widened portion 34, leading to completion of the tire 2 of the present invention. Hereinafter, the technology for reducing the risk of damage to each land portion edge will be described in detail.

In FIG. 4, reference characters B1, B2, B3, and B4 represent specific positions in the contour line of the circumferential narrow groove 38. The position B1 is included in the tapered portion 32. The positions B2 and B3 are included in the body portion 30. The position B4 is included in the widened portion 34. Of the contour line, a portion from the position B1 to the position B2 is a portion transitioning from the tapered portion 32 to the body portion 30, and is referred to as outer transition portion 40. A portion from the position B3 to the position B4 is a portion transitioning from the body portion 30 to the widened portion 34, and is referred to as inner transition portion 42.

In the tire 2, each of the outer transition portion 40 and the inner transition portion 42 is represented by a single arc. In other words, the contour lines of the outer transition portion 40 and the inner transition portion 42 are both arcs.

In FIG. 4, an arrow Rs indicates the radius of the arc representing the contour of the outer transition portion 40 (hereinafter referred to as outer arc). The outer arc is tangent to the contour line of the tapered portion 32 at the position B1, and is tangent to the contour line of the body portion 30 at the position B2. As described above, the contour line of the body portion 30 is a straight line. Although not shown, the center of the outer arc is located on a straight line that perpendicularly intersects the contour line of the body portion 30 at the position B2.

In FIG. 4, a straight line indicated by reference character LB1 is an extension line of the contour line of the tapered portion 32 at the position B1. A straight line indicated by reference character LB2 is an extension line of the contour line of the body portion 30 at the position B2. A position indicated by reference character P12 is the point of intersection of the extension line LB1 and the extension line LB2. The point of intersection P12 is the boundary position between the tapered portion 32 and the body portion 30 that is set virtually (hereinafter referred to as virtual boundary position).

In FIG. 4, an arrow Ru indicates the radius of the arc representing the contour of the inner transition portion 42 (hereinafter referred to as inner arc). The inner arc is tangent to the contour line of the body portion 30 at the position B3, and is tangent to the contour line of the widened portion 34 at the position B4. As described above, the contour line of the body portion 30 is a straight line. Although not shown, the center of the inner arc is located on a straight line that perpendicularly intersects the contour line of the body portion 30 at the position B3.

In FIG. 4, a straight line indicated by reference character LB3 is an extension line of the contour line of the body portion 30 at the position B3. A straight line indicated by reference character LB4 is an extension line of the contour line of the widened portion 34 at the position B4. A position indicated by reference character P34 is the point of intersection of the extension line LB3 and the extension line LB4. The point of intersection P34 is the boundary position between the body portion 30 and the widened portion 34 that is set virtually (hereinafter referred to as virtual boundary position).

As described above, the contour line of the body portion 30 is a straight line. The body portion 30 is a portion having the narrowest groove width WM in the circumferential narrow groove 38. In the contour line of the circumferential narrow groove 38, the portion having the narrowest groove width WM is specified as the body portion 30. By this specification, the positions B2 and B3 are determined.

A straight line orthogonal to the contour line of the body portion 30 at the position B2 is drawn, and an arc that has a center on this straight line and passes through the position B2 is drawn. By drawing the arc while changing the radius thereof, an arc having the maximum overlap length with the contour line of the circumferential narrow groove 38 based on the position B2 is obtained. A portion represented by this arc is the outer transition portion 40, and an end of this arc is specified as the position B1.

A straight line orthogonal to the contour line of the body portion 30 at the position B3 is drawn, and an arc that has a center on this straight line and passes through the position B3 is drawn. By drawing the arc while changing the radius thereof, an arc having the maximum overlap length with the contour line of the circumferential narrow groove 38 based on the position B3 is obtained. A portion represented by this arc is the inner transition portion 42, and an end of this arc is specified as the position B4.

In the tire 2, in the contour line of the circumferential narrow groove 38 in the meridian cross-section of the tire 2, when the portion transitioning from the tapered portion 32 to the body portion 30 is defined as the outer transition portion 40 and the portion transitioning from the body portion 30 to the widened portion 34 is defined as the inner transition portion 42, the outer transition portion 40 is represented by an arc that is tangent to both the contour line of the tapered portion 32 and the contour line of the body portion 30. The inner transition portion 42 is represented by an arc that is tangent to both the contour line of the body portion 30 and the contour line of the widened portion 34.

As described above, the circumferential narrow groove 38 of the tire 2 includes the tapered portion 32. In the tapered portion 32, an angle formed between the tread surface 6 and the wall surface 24 is obtuse even when the tread 4 is worn. At the edges of the land portions 14, damage such as chipping and tearing-off is less likely occur. Since the groove width of the tapered portion 32 is wider than the groove width of the body portion 30, the tapered portion 32 promotes drainage of water existing between a road surface and the tread surface 6. The tire 2 can exhibit good wet performance.

When the tread 4 is further worn, the portion exposed on the tread surface 6 transitions from the tapered portion 32 to the body portion 30.

As described above, the contour of the outer transition portion 40, which is the portion transitioning from the tapered portion 32 to the body portion 30, is represented by a single arc. In the outer transition portion 40, the forces applied to the edges of the land portions 14 are effectively distributed. The risk of damage to each land portion edge is reduced as compared to the case where the outer transition portion 40 is not provided.

When the tread 4 is further worn, the portion exposed on the tread surface 6 transitions from the body portion 30 to the widened portion 34.

As described above, the contour of the inner transition portion 42, which is the portion transitioning from the body portion 30 to the widened portion 34, is represented by a single arc. In the inner transition portion 42, the groove width gradually widens as compared to the case where the inner transition portion 42 is not provided. Even when the tread 4 is worn, the angle formed between the tread surface 6 and the wall surface 24 is kept larger than that in the case where the inner transition portion 42 is not provided. The stiffness at each land portion edge is appropriately maintained, so that the risk of damage to each land portion edge is reduced.

Moreover, the radius Ru of the arc representing the inner transition portion 42 of the tire 2 is larger than the radius Rs of the arc representing the outer transition portion 40.

Since the arc representing the inner transition portion 42 has the larger radius Ru, the stiffness at each land portion edge is appropriately maintained during the transition of the exposed portion of the circumferential narrow groove 38 from the body portion 30 to the widened portion 34. The tire 2 can effectively reduce the risk of damage to each land portion edge.

On the other hand, since the arc representing the outer transition portion 40 has the smaller radius Rs, the tire 2 can effectively expand the region of the body portion 30 in the circumferential narrow groove 38. The outer transition portion 40, which is represented by the arc having the smaller radius Rs, can effectively contribute to reducing rolling resistance and improving wear resistance.

As described above, the tire 2 can have improved wet performance while suppressing an increase in rolling resistance and a decrease in wear resistance. The tire 2 can achieve reduction of the risk of damage to each land portion edge and improvement of wet performance while suppressing an increase in rolling resistance and a decrease in wear resistance.

In the tire 2, the radius Ru of the arc representing the inner transition portion 42 is larger than the maximum groove width WX of the widened portion 34. Accordingly, the groove width is gradually widened when the exposed portion of the circumferential narrow groove 38 transitions from the body portion 30 to the widened portion 34. In the tire 2, the angle formed between the tread surface 6 and the wall surface 24 can be kept larger while the tread 4 is being worn. The stiffness at each land portion edge is appropriately maintained, so that the risk of damage to each land portion edge is reduced. From this viewpoint, the radius Ru of the arc representing the inner transition portion 42 is larger than the maximum groove width WX of the widened portion 34.

As described above, in the contour line of the circumferential narrow groove 38 in the meridian cross-section of the tire 2, the groove bottom portion 36 is represented by a single arc. In FIG. 4, an arrow Rb indicates the radius of the arc representing the groove bottom portion 36.

In the tire 2, the radius Ru of the arc representing the inner transition portion 42 is not less than 3 times the radius Rb of the arc representing the groove bottom portion 36. In other words, the ratio (Ru/Rb) of the radius Ru to the radius Rb is not less than 3. Accordingly, the groove width is gradually widened when the exposed portion of the circumferential narrow groove 38 transitions from the body portion 30 to the widened portion 34. In the tire 2, the angle formed between the tread surface 6 and the wall surface 24 can be kept larger while the tread 4 is being worn. The stiffness at each land portion edge is appropriately maintained, so that the risk of damage to each land portion edge is reduced. From this viewpoint, the ratio (Ru/Rb) is not less than 5. From the viewpoint that the widened portion 34 can sufficiently exhibit its function, the ratio (Ru/Rb) is not greater than 20.0.

As described above, the radius Ru of the arc representing the inner transition portion 42 of the tire 2 is larger than the radius Rs of the arc representing the outer transition portion 40. From the viewpoint of being able to effectively reduce the risk of damage to each land portion edge while suppressing an increase in rolling resistance and a decrease in wear resistance, the ratio (Ru/Rs) of the radius Ru of the arc representing the inner transition portion 42 to the radius Rs of the arc representing the outer transition portion 40 is more preferably not less than 2.0 and not greater than 20.0.

The ratio (WX/WM) of the maximum groove width WX of the widened portion 34 to the groove width WM of the body portion 30 is preferably not less than 2.5 and not greater than 10.0.

When the ratio (WX/WM) is set to be not less than 2.5, the exposed widened portion 34 can effectively contribute to drainage of water existing between a road surface and the tread surface 6. Even when the tread 4 is worn, the tire 2 can maintain good wet performance. From this viewpoint, the ratio (WX/WM) is more preferably not less than 3.0.

When the ratio (WX/WM) is set to be not greater than 10.0, the influence of the widened portion 34 on the stiffness of the tread 4 is suppressed. An excessive decrease in the stiffness of the tread 4 is suppressed, so that the circumferential narrow groove 38 can effectively contribute to reducing rolling resistance and improving wear resistance. A rapid change in groove width at the inner transition portion 42 is also suppressed, so that stress is less likely to be concentrated on the inner transition portion 42. The tire 2 can also suppress occurrence of cracking at the inner transition portion 42. From this viewpoint, the ratio (WX/WM) is more preferably not greater than 5.0.

In FIG. 4, a length indicated by a double-headed arrow d1 is the groove depth of the circumferential narrow groove 38. The groove depth d1 is represented as the length from the line segment connecting the left and right edges 12E to the groove bottom 12T.

A length indicated by a double-headed arrow d2 is the groove depth from the groove opening 12M to the maximum groove width position PX of the widened portion 34 (also referred to as groove depth at the maximum groove width position PX). The groove depth d2 is represented as the length from the line segment connecting the left and right edges 12E to the maximum groove width position PX.

A length indicated by a double-headed arrow d3 is the groove depth of the tapered portion 32. The groove depth d3 is represented as the length from the line segment connecting the left and right edges 12E to the virtual boundary position P12.

The groove depths d1, d2, and d3 are measured along the above-described normal line LC which passes through the groove bottom 12T and is normal to the line segment connecting the left and right edges 12E.

The ratio (d2/d1) of the groove depth d2 from the groove opening 12M to the position PX, at which the widened portion 34 has the maximum groove width WX, to the groove depth d1 of the circumferential narrow groove 38 is preferably not less than 0.6 and not greater than 0.9.

When the ratio (d2/d1) is set to be not less than 0.6, the body portion 30 having a sufficient length can be formed in the tire 2 while the widened portion 34 having an appropriate size is formed. The tire 2 can have improved wet performance while suppressing an increase in rolling resistance and a decrease in wear resistance. From this viewpoint, the ratio (d2/d1) is more preferably not less than 0.7.

When the ratio (d2/d1) is set to be not greater than 0.9, the widened portion 34 is provided at an appropriate position. The exposed widened portion 34 can effectively contribute to drainage of water. Even when the tread 4 is worn, the tire 2 can maintain good wet performance. From this viewpoint, the ratio (d2/d1) is more preferably not greater than 0.8.

The ratio (d3/d1) of the groove depth d3 of the tapered portion 32 to the groove depth d1 of the circumferential narrow groove 38 is preferably not less than 0.05 and not greater than 0.3.

When the ratio (d3/d1) is set to be not less than 0.05, the tapered portion 32 having an appropriate size is formed. The tapered portion 32 can contribute to drainage of water and reduction of the risk of damage to the edges 12E of the land portions 14. The tire 2 can exhibit good wet performance. From this viewpoint, the ratio (d3/d1) is more preferably not less than 0.1.

When the ratio (d3/d1) is set to be not greater than 0.3, the tapered portion 32 is formed with an appropriate size. In the tire 2, the body portion 30 that can contribute to suppressing deformation of the land portions 14 can be formed. The body portion 30 can contribute to reducing rolling resistance and improving wear resistance. From this viewpoint, the ratio (d3/d1) is more preferably not greater than 0.2.

The groove depth d1 of the circumferential narrow groove 38 of the tire 2 is equal to the groove depth DGm of the circumferential wide groove 28, or the circumferential narrow groove 38 is shallower than the circumferential wide groove 28. As described above, the circumferential narrow groove 38 has the widened portion 34 on the groove bottom 12T side thereof. The groove volume of the circumferential wide groove 28 is reduced due to wear, but when the widened portion 34 is exposed, the widened portion 34 can effectively contribute to compensating for the reduced groove volume. The tire 2 can effectively suppress a decrease in wet performance due to wear.

From this viewpoint, it is preferable that the groove depth d1 of the circumferential narrow groove 38 is equal to the groove depth DGm of the circumferential wide groove 28, or the circumferential narrow groove 38 is shallower than the circumferential wide groove 28. In other words, the ratio (d1/DGm) of the groove depth d1 of the circumferential narrow groove 38 to the groove depth DGm of the circumferential wide groove 28 is preferably not greater than 1.0.

From the viewpoint that the widened portion 34 is located at an appropriate position and can effectively contribute to compensating for the reduced groove volume, the ratio (d1/DGm) is preferably not less than 0.75.

As described above, the four circumferential main grooves 12 are formed on the tread 4 of the tire 2.

Among the four circumferential main grooves 12, two circumferential main grooves 12, specifically, the two center circumferential main grooves 12c, are located between the middle land portion 14m on the first end TE1 side of the tread surface 6 (hereinafter referred to as first middle land portion 14m1) and the middle land portion 14m on the second end TE2 side of the tread surface 6 (hereinafter referred to as second middle land portion 14m2). As described above, each center circumferential main groove 12c is the circumferential narrow groove 38.

As is obvious from FIG. 1, portions at which a groove width WGc at the groove opening 12M is wide (hereinafter referred to as widened portions 44) and portions at which the groove width WGc at the groove opening 12M is narrow (hereinafter referred to as narrow portions 46) are provided at the tapered portion 32 of each circumferential narrow groove 38 of the tire 2.

As shown in FIG. 1, the line IV-IV intersects the wide portion 44. The tapered portion 32 of the circumferential narrow groove 38 shown in FIG. 4 above is the wide portion 44 at which the groove opening 12M is wide.

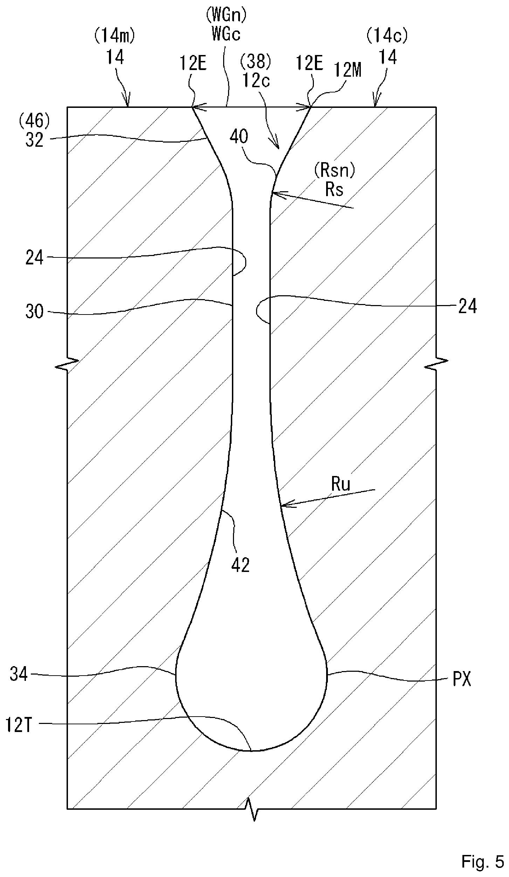

FIG. 5 is a cross-sectional view of the circumferential narrow groove 38 taken along a line V-V in FIG. 1. In FIG. 1, the line V-V intersects the narrow portion 46. The line V-V extends in the axial direction and is included in the meridian cross-section.

The tapered portion 32 of the circumferential narrow groove 38 shown in FIG. 5 is the narrow portion 46 at which the groove opening 12M is narrow. The configuration of the cross-sectional shape of the circumferential narrow groove 38 shown in FIG. 5 is the same as the cross-sectional shape of the circumferential narrow groove 38 shown in FIG. 4, except that the tapered portion 32 is the narrow portion 46.

The wall surfaces 24 of each wide portion 44 are more inclined than the wall surfaces 24 of each narrow portion 46. The wide portion 44 can contribute to reducing the risk of damage to each land portion edge. The wide portion 44 has a large groove volume, and thus can contribute to improving wet performance.

On the other hand, the narrow portion 46 has a smaller groove volume than the wide portion 44. However, the narrow portion 46 increases the volumes of the land portions 14, and thus can contribute to increasing the stiffness of the land portions 14. The narrow portion 46 can contribute to reducing rolling resistance and improving wear resistance.

The tapered portion 32 of the circumferential narrow groove 38 of the tire 2 includes the wide portions 44 at which the groove opening 12M is wide and the narrow portions 46 at which the groove opening 12M is narrow. The wide portions 44 and the narrow portions 46 are arranged alternately in the circumferential direction.

In FIG. 4, a double-headed arrow WGw indicates the groove width at the groove opening 12M of the wide portion 44. An arrow Rsw indicates the radius of the arc representing the contour of the outer transition portion 40 as a portion transitioning from the wide portion 44 to the body portion 30. The radius Rsw is set as appropriate in consideration of the groove width WGw of the wide portion 44 and the groove width WM of the body portion 30.

In FIG. 5, a double-headed arrow WGn indicates the groove width at the groove opening 12M of the narrow portion 46. An arrow Rsn indicates the radius of the arc representing the contour of the outer transition portion 40 as a portion transitioning from the narrow portion 46 to the body portion 30. The radius Rsn is set as appropriate in consideration of the groove width WGn of the narrow portion 46 and the groove width WM of the body portion 30.

In the tire 2, the radius Rsw of the arc representing the contour of the outer transition portion 40 as the portion transitioning from the wide portion 44 to the body portion 30 is equal to the radius Rsn of the arc representing the contour of the outer transition portion 40 as the portion transitioning from the narrow portion 46 to the body portion 30. In the tire 2, since the wide portions 44 and the narrow portions 46 which are arranged so as to be aligned in the circumferential direction can be smoothly connected, concentration of stress on the boundary portions between the wide portions 44 and the narrow portions 46 can be effectively suppressed. From this viewpoint, the radius Rsw of the arc representing the contour of the outer transition portion 40 as the portion transitioning from the wide portion 44 to the body portion 30 is preferably equal to the radius Rsn of the arc representing the contour of the outer transition portion 40 as the portion transitioning from the narrow portion 46 to the body portion 30. In the present invention, the radius Rsw being equal to the radius Rsn means that the ratio (Rsw/Rsn) of the radius Rsw to the radius Rsn is not less than 0.95 and not greater than 1.05.

In the tire 2, the influence of the wide portions 44 on rolling resistance and wear resistance can be suppressed as compared to a tire in which the tapered portion 32 is formed as the wide portion 44 over the entire circumference of the circumferential narrow groove 38.

In the tire 2, the influence of the narrow portions 46 on the risk of damage to each land portion edge and wet performance can be suppressed as compared to a tire in which the tapered portion 32 is formed as the narrow portion 46 over the entire circumference of the circumferential narrow groove 38.

The tire 2 can effectively achieve reduction of the risk of damage to each land portion edge and improvement of wet performance while suppressing an increase in rolling resistance and a decrease in wear resistance. From this viewpoint, it is preferable that the tapered portion 32 of the circumferential narrow groove 38 includes the wide portions 44 at which the groove opening 12M is wide and the narrow portions 46 at which the groove opening 12M is narrow, and the wide portions 44 and the narrow portions 46 are arranged alternately in the circumferential direction.

From the viewpoint that the tapered portion 32 including the wide portions 44 and the narrow portions 46 can effectively achieve reduction of the risk of damage to each land portion edge and improvement of wet performance while suppressing an increase in rolling resistance and a decrease in wear resistance, the ratio (WGn/WGw) of the groove width WGn of the narrow portion 46 to the groove width WGw of the wide portion 44 is preferably not less than 0.3 and not greater than 0.7.

From the viewpoint of being able to effectively increase the stiffness of a crown portion and being able to more effectively achieve reduction of the risk of damage to each land portion edge and improvement of wet performance while suppressing an increase in rolling resistance and a decrease in wear resistance, it is more preferable that the circumferential main grooves 12 located between the first middle land portion 14m1 and the second middle land portion 14m2 are all circumferential narrow grooves 38. In this case, it is further preferable that the tapered portion 32 of each circumferential narrow groove 38 includes the wide portions 44 and the narrow portions 46.

The circumferential narrow groove 38 on the first end TE1 side and the circumferential narrow groove 38 on the second end TE2 side are two adjacent circumferential narrow grooves 38. As shown in FIG. 1, the wide portions 44 of the circumferential narrow groove 38 on the first end TE1 side overlap the narrow portions 46 of the circumferential narrow groove 38 on the second end TE2 side in the axial direction. Since the wide portions 44 and the narrow portions 46 are arranged in the two adjacent circumferential narrow grooves 38 so as to overlap each other in the axial direction, the stiffness of the entire tread 4 is leveled. Accordingly, occurrence of uneven wear due to a stiffness difference is suppressed. The tire 2 can have improved wear resistance. From this viewpoint, it is preferable that, in the two adjacent circumferential narrow grooves 38, the wide portions 44 of the circumferential narrow groove 38 on the first end TE1 side of the tread surface 6 overlap the narrow portions 46 of the circumferential narrow groove 38 on the second end TE2 side of the tread surface 6 in the axial direction.

As described above, each middle circumferential main groove 12m is the circumferential wide groove 28. As shown in FIG. 3, the inner wall surface 24u of the circumferential wide groove 28 is inclined relative to a normal line of the tread surface 6 at the groove opening 12M. In FIG. 3, an angle θu is the inclination angle of the inner wall surface 24u.

Of the pair of edges 12E forming the groove opening 12M of the circumferential wide groove 28, an edge 12Eu located on the equator side is also the edge of the top surface of the middle land portion 14m.

As described above, the circumferential narrow grooves 38 each having the body portion 30 with a narrow groove width are located between the left and right middle land portions 14m in the tire 2. Each middle land portion 14m is located closer to the crown land portion 14c. Therefore, stress is likely to be concentrated on the edge 12Eu of the middle land portion 14m, so that there is a concern that damage such as chipping may occur at the edge 12Eu.

In the tire 2, however, as described above, the inner wall surface 24u of the circumferential wide groove 28 is inclined relative to the normal line of the tread surface 6 at the groove opening 12M. Concentration of stress on the edge 12Eu is suppressed. The tire 2 can effectively suppress occurrence of damage at the edge 12Eu of the middle land portion 14m. From this viewpoint, it is preferable that the inner wall surface 24u of the circumferential wide groove 28 is inclined relative to the normal line of the tread surface 6 at the groove opening 12M. In this case, the inclination angle θu of the inner wall surface 24u is more preferably not less than 10 degrees and further preferably not less than 15 degrees. From the viewpoint of being able to well balance the groove volume of the circumferential wide groove 28 and the volume of the middle land portion 14m, the inclination angle θu is preferably not greater than 25 degrees and more preferably not greater than 20 degrees.

As shown in FIG. 2, the outer wall surface 24s of the circumferential wide groove 28 is also inclined relative to the normal line of the tread surface 6 at the groove opening 12M. In FIG. 3, an angle θs is the inclination angle of the outer wall surface 24s.

As shown in FIG. 3, the inclination angle θs of the outer wall surface 24s is smaller than the inclination angle θu of the inner wall surface 24u. Accordingly, the tire 2 can ensure the area of the top surface of the shoulder land portion 14s. The stiffness of the shoulder land portion 14s is maintained, so that a decrease in wear resistance is suppressed. From this viewpoint, it is preferable that the outer wall surface 24s has an inclination angle θs smaller than the inclination angle θu of the inner wall surface 24u.

As is obvious from the above description, according to the present invention, a heavy duty tire that can achieve reduction of the risk of damage to each land portion edge and improvement of wet performance while suppressing an increase in rolling resistance and a decrease in wear resistance, is obtained.

The above-described technology capable of achieving reduction of the risk of damage to each land portion edge and improvement of wet performance while suppressing an increase in rolling resistance and a decrease in wear resistance can be applied to various tires.

## Claims

1. A heavy duty tire (2) comprising a tread (4) having a tread surface (6) configured to come into contact with a road surface, wherein
the tread (4) has a plurality of circumferential main grooves (12),
the plurality of circumferential main grooves (12) form a plurality of land portions (14) aligned in an axial direction in the tread (4),
the plurality of circumferential main grooves (12) include a circumferential narrow groove (38),
the circumferential narrow groove (38) includes a body portion (30), a tapered portion (32) located outward of the body portion (30) and including a groove opening (12M) of the circumferential narrow groove (38), and a widened portion (34) located inward of the body portion (30) and including a groove bottom (12T) of the circumferential narrow groove (38),
the body portion (30) extends straight,
a pair of wall surfaces (24) of the circumferential narrow groove (38) come into contact with each other at the body portion (30) when the tread (4) comes into contact with a road surface,
the tapered portion (32) is tapered from the groove opening (12M) toward the body portion (30),
the widened portion (34) has a groove width wider than a groove width (WM) of the body portion (30) and is tapered from a position (PX) at which the widened portion (34) has a maximum groove width (WX) toward the body portion (30),
in a contour line of the circumferential narrow groove (38) in a meridian cross-section of the tire (2), when a portion transitioning from the tapered portion (32) to the body portion (30) is defined as an outer transition portion (40), and a portion transitioning from the body portion (30) to the widened portion (34) is defined as an inner transition portion (42),
the outer transition portion (40) is represented by an arc tangent to both a contour line of the tapered portion (32) and a contour line of the body portion (30), and
the inner transition portion (42) is represented by an arc tangent to the contour line of the body portion (30) and a contour line of the widened portion (34), and
a radius (Ru) of the arc representing the inner transition portion (42) is larger than a radius (Rs) of the arc representing the outer transition portion (40),
**characterized in that**
the radius (Ru) of the arc representing the inner transition portion (42) is larger than the maximum groove width (WX) of the widened portion (34),
a portion, of the widened portion (34), including the groove bottom (12T) and the position (PX) at which the widened portion (34) has the maximum groove width (WX) is a groove bottom portion (36),
the groove bottom portion (36) is represented by an arc in the contour line of the circumferential narrow groove (38) in the meridian cross-section of the tire (2), and
the radius (Ru) of the arc representing the inner transition portion (42) is not less than 5 times and not greater than 20 times the radius (Rb) of the arc representing the groove bottom portion (36).

2. The heavy duty tire (2) according to claim 1, wherein a ratio of the groove width (WM) of the body portion (30) to the maximum groove width (WX) of the widened portion (34) is not less than 0.1 and not greater than 0.4.

3. The heavy duty tire (2) according to claim 1 or 2, wherein a ratio (d2/d1) of a groove depth (d2) from the groove opening (12M) to the position (PX) at which the widened portion (34) has the maximum groove width (WX), to a groove depth (d1) of the circumferential narrow groove (38), is not less than 0.6 and not greater than 0.9.

4. The heavy duty tire (2) according to any one of claims 1 to 3, wherein a ratio (d3/d1) of a groove depth (d3) of the tapered portion (32) to the groove depth (d1) of the circumferential narrow groove (38) is not less than 0.05 and not greater than 0.3.

5. The heavy duty tire (2) according to any one of claims 1 to 4, wherein
among the plurality of land portions (14), a land portion (14) including an equator or a land portion (14) closest to the equator is a crown land portion (14c), and a land portion (14) closest to the crown land portion (14c) is a middle land portion (14m),
among the plurality of circumferential main grooves (12), a circumferential main groove (12) located between a middle land portion (14m1) on a first end (TE1) side of the tread surface (6) and a middle land portion (14m2) on a second end (TE2) side of the tread surface (6) is the circumferential narrow groove (38),
the tapered portion (32) of the circumferential narrow groove (38) includes wide portions (44) at which the groove opening (12M) is wide and narrow portions (46) at which the groove opening (12M) is narrow, and
the wide portions (44) and the narrow portions (46) are arranged alternately in a circumferential direction.

6. The heavy duty tire (2) according to claim 5, wherein, in two adjacent circumferential narrow grooves (38), the wide portions (44) of the circumferential narrow groove (38) on the first end (TE1) side of the tread surface (6) overlaps the narrow portions (46) of the circumferential narrow groove (38) on the second end (TE2) side of the tread surface (6) in the axial direction.

7. The heavy duty tire (2) according to any one of claims 1 to 6, wherein a ratio (Ru/Rs) of the radius (Ru) of the arc representing the inner transition portion (42) to the radius (Rs) of the arc representing the outer transition portion (40) is not less than 2.0 and not greater than 20.0.

8. The heavy duty tire (2) according to any one of claims 1 to 7, wherein a ratio (Rsw/Rsn) of a radius (Rsw) of an arc representing a contour of the outer transition portion (40) as a portion transitioning from the wide portion (44) to the body portion (30), to a radius (Rsn) of an arc representing a contour of the outer transition portion (40) as a portion transitioning from the narrow portion (46) to the body portion (30), is not less than 0.95 and not greater than 1.05.

9. The heavy duty tire (2) according to any one of claims 1 to 8, wherein a ratio (WGn/WGw) of a groove width (WGn) of the narrow portion (46) to a groove width (WGw) of the wide portion (44) is not less than 0.3 and not greater than 0.7.

## Patentansprüche

1. Schwerlastreifen (2), umfassend eine Lauffläche (4) mit einer Laufflächenoberfläche (6), die konfiguriert ist, um mit einer Straßenoberfläche in Kontakt zu kommen, wobei
die Lauffläche (4) eine Vielzahl von Umfangshauptrillen (12) aufweist,
die Vielzahl von Umfangshauptrillen (12) eine Vielzahl von Landabschnitten (14) bilden, die in einer axialen Richtung in der Lauffläche (4) ausgerichtet sind,
die Vielzahl von Umfangshauptrillen (12) eine schmale Umfangsrille (38) umfassen,
die schmale Umfangsrille (38) einen Körperabschnitt (30), einen sich verjüngenden Abschnitt (32), der außen von dem Körperabschnitt (30) angeordnet ist und eine Rillenöffnung (12M) der schmalen Umfangsrille (38) umfasst, und einen verbreiterten Abschnitt (34) umfasst, der innen von dem Körperabschnitt (30) angeordnet ist und einen Rillenboden (12T) der schmalen Umfangsrille (38) umfasst,
der Körperabschnitt (30) sich gerade erstreckt,
ein Paar Wandflächen (24) der schmalen Umfangsrille (38) an dem Körperabschnitt (30) miteinander in Kontakt kommen, wenn die Lauffläche (4) mit einer Straßenoberfläche in Kontakt kommt,
der sich verjüngende Abschnitt (32) sich von der Rillenöffnung (12M) zu dem Körperabschnitt (30) hin verjüngt,
der verbreiterte Abschnitt (34) eine Rillenbreite aufweist, die breiter als eine Rillenbreite (WM) des Körperabschnitts (30) ist, und sich von einer Position (PX), an der der verbreiterte Abschnitt (34) eine maximale Rillenbreite (WX) aufweist, zu dem Körperabschnitt (30) hin verjüngt,
in einer Konturlinie der schmalen Umfangsrille (38) in einem Meridianquerschnitt des Reifens (2), wenn ein Abschnitt, der von dem sich verjüngenden Abschnitt (32) zu dem Körperabschnitt (30) übergeht, als ein äußerer Übergangsabschnitt (40) definiert ist, und ein Abschnitt, der von dem Körperabschnitt (30) zu dem verbreiterten Abschnitt (34) übergeht, als ein innerer Übergangsabschnitt (42) definiert ist,
der äußere Übergangsabschnitt (40) durch eine Bogentangente sowohl an eine Konturlinie des sich verjüngenden Abschnitts (32) als auch an eine Konturlinie des Körperabschnitts (30) dargestellt ist, und
der innere Übergangsabschnitt (42) durch eine Bogentangente an die Konturlinie des Körperabschnitts (30) und an eine Konturlinie des verbreiterten Abschnitts (34) dargestellt ist, und
ein Radius (Ru) des Bogens, der den inneren Übergangsabschnitt (42) darstellt, größer als ein Radius (Rs) des Bogens ist, der den äußeren Übergangsabschnitt (40) darstellt,
**dadurch gekennzeichnet, dass**
der Radius (Ru) des Bogens, der den inneren Übergangsabschnitt (42) darstellt, größer als die maximale Rillenbreite (WX) des verbreiterten Abschnitts (34) ist,
ein Abschnitt des verbreiterten Abschnitts (34), der den Rillenboden (12T) und die Position (PX) umfasst, an der der verbreiterte Abschnitt (34) die maximale Rillenbreite (WX) aufweist, ein Rillenbodenabschnitt (36) ist,
der Rillenbodenabschnitt (36) durch einen Bogen in der Konturlinie der schmalen Umfangsrille (38) in dem Meridianquerschnitt des Reifens (2) dargestellt ist, und
der Radius (Ru) des Bogens, der den inneren Übergangsabschnitt (42) darstellt, nicht kleiner als das 5-fache und nicht größer als das 20-fache des Radius (Rb) des Bogens ist, der den Rillenbodenabschnitt (36) darstellt.

2. Schwerlastreifen (2) nach Anspruch 1, wobei ein Verhältnis der Rillenbreite (WM) des Körperabschnitts (30) zu der maximalen Rillenbreite (WX) des verbreiterten Abschnitts (34) nicht kleiner als 0,1 und nicht größer als 0,4 ist.

3. Schwerlastreifen (2) nach Anspruch 1 oder 2, wobei ein Verhältnis (d2/d1) einer Rillentiefe (d2) von der Rillenöffnung (12M) zu der Position (PX), an der der verbreiterte Abschnitt (34) die maximale Rillenbreite (WX) aufweist, zu einer Rillentiefe (d1) der schmalen Umfangsrille (38) nicht kleiner als 0,6 und nicht größer als 0,9 ist.

4. Schwerlastreifen (2) nach einem der Ansprüche 1 bis 3, wobei ein Verhältnis (d3/d1) einer Rillentiefe (d3) des sich verjüngenden Abschnitts (32) zu der Rillentiefe (d1) der schmalen Umfangsrille (38) nicht kleiner als 0,05 und nicht größer als 0,3 ist.

5. Schwerlastreifen (2) nach einem der Ansprüche 1 bis 4, wobei
unter der Vielzahl von Landabschnitten (14) ein Landabschnitt (14), der einen Äquator umfasst, oder ein Landabschnitt (14), der dem Äquator am nächsten ist, ein Kronenlandabschnitt (14c) ist, und ein Landabschnitt (14), der dem Kronenlandabschnitt (14c) am nächsten ist, ein mittlerer Landabschnitt (14m) ist,
unter der Vielzahl von Umfangshauptrillen (12) eine Umfangshauptrille (12), die zwischen einem mittleren Landabschnitt (14m1) auf einer Seite eines ersten Endes (TE1) der Laufflächenoberfläche (6) und einem mittleren Landabschnitt (14m2) auf einer Seite eines zweiten Endes (TE2) der Laufflächenoberfläche (6) angeordnet ist, die schmale Umfangsrille (38) ist,
der sich verjüngende Abschnitt (32) der schmalen Umfangsrille (38) breite Abschnitte (44), an denen die Rillenöffnung (12M) breit ist, und schmale Abschnitte (46) umfasst, an denen die Rillenöffnung (12M) schmal ist, und
die breiten Abschnitte (44) und die schmalen Abschnitte (46) abwechselnd in einer Umfangsrichtung angeordnet sind.

6. Schwerlastreifen (2) nach Anspruch 5, wobei in zwei benachbarten schmalen Umfangsrillen (38) die breiten Abschnitte (44) der schmalen Umfangsrille (38) auf der Seite des ersten Endes (TE1) der Laufflächenoberfläche (6) die schmalen Abschnitte (46) der schmalen Umfangsrille (38) auf der Seite des zweiten Endes (TE2) der Laufflächenoberfläche (6) in der axialen Richtung überlappen.

7. Schwerlastreifen (2) nach einem der Ansprüche 1 bis 6, wobei ein Verhältnis (Ru/Rs) des Radius (Ru) des Bogens, der den inneren Übergangsabschnitt (42) darstellt, zu dem Radius (Rs) des Bogens, der den äußeren Übergangsabschnitt (40) darstellt, nicht kleiner als 2,0 und nicht größer als 20,0 ist.

8. Schwerlastreifen (2) nach einem der Ansprüche 1 bis 7, wobei ein Verhältnis (Rsw/Rsn) eines Radius (Rsw) eines Bogens, der eine Kontur des äußeren Übergangsabschnitts (40) als einen Abschnitt darstellt, der von dem breiten Abschnitt (44) zu dem Körperabschnitt (30) übergeht, zu einem Radius (Rsn) eines Bogens, der eine Kontur des äußeren Übergangsabschnitts (40) als einen Abschnitt darstellt, der von dem schmalen Abschnitt (46) zu dem Körperabschnitt (30) übergeht, nicht kleiner als 0,95 und nicht größer als 1,05 ist.

9. Schwerlastreifen (2) nach einem der Ansprüche 1 bis 8, wobei ein Verhältnis (WGn/WGw) einer Rillenbreite (WGn) des schmalen Abschnitts (46) zu einer Rillenbreite (WGw) des breiten Abschnitts (44) nicht kleiner als 0,3 und nicht größer als 0,7 ist.

## Revendications

1. Pneumatique pour service intensif (2) comprenant une bande de roulement (4) ayant une surface de bande de roulement (6) configurée pour venir en contact avec une surface routière, dans lequel la bande de roulement (4) a une pluralité de rainures principales circonférentielles (12),
la pluralité de rainures principales circonférentielles (12) forment une pluralité de portions en relief (14) alignées dans une direction axiale dans la bande de roulement (4),
la pluralité de rainures principales circonférentielles (12) incluent une rainure étroite circonférentielle (38),
la rainure étroite circonférentielle (38) inclut une portion formant corps (30), une portion effilée (32) située à l'extérieur de la portion formant corps (30) et incluant une ouverture de rainure (12M) de la rainure étroite circonférentielle (38), et une portion élargie (34) située à l'intérieur de la portion formant corps (30) et incluant un fond de rainure (12T) de la rainure étroite circonférentielle (38),
la portion formant corps (30) s'étend de manière rectiligne,
une paire de surfaces formant parois (24) de la rainure étroite circonférentielle (38) viennent en contact l'une avec l'autre au niveau de la portion formant corps (30) quand la bande de roulement (4) vient en contact avec une surface routière,
la portion effilée (32) est effilée depuis l'ouverture de rainure (12M) vers la portion formant corps (30),
la portion élargie (34) a une largeur de rainure plus large qu'une largeur de rainure (WM) de la portion formant corps (30) et est effilée depuis une position (PX) à laquelle la portion élargie (34) a une largeur de rainure maximum (WX) vers la portion formant corps (30),
dans une ligne de contour de la rainure étroite circonférentielle (38) dans une section transversale méridienne du pneumatique (2), une portion faisant une transition depuis la portion effilée (32) jusqu'à la portion formant corps (30) étant définie en tant que portion de transition extérieure (40), et une portion faisant une transition depuis la portion formant corps (30) jusqu'à la portion élargie (34) étant définie en tant que portion de transition intérieure (42),
la portion de transition extérieure (40) est représentée par un arc tangent à la fois à une ligne de contour de la portion effilée (32) et à une ligne de contour de la portion formant corps (30), et
la portion de transition intérieure (42) est représentée par un arc tangent à la ligne de contour de la portion formant corps (30) et à une ligne de contour de la portion élargie (34), et
un rayon (Ru) de l'arc représentant la portion de transition intérieure (42) est supérieur à un rayon (Rs) de l'arc représentant la portion de transition extérieure (40),
**caractérisé en ce que**
le rayon (Ru) de l'arc représentant la portion de transition intérieure (42) est supérieur à la largeur de rainure maximum (WX) de la portion élargie (34), une portion de la portion élargie (34), incluant le fond de rainure (12T) et la position (PX) à laquelle la portion élargie (34) a la largeur de rainure maximum (WX), est une portion de fond de rainure (36),
la portion de fond de rainure (36) est représentée par un arc dans la ligne de contour de la rainure étroite circonférentielle (38) dans la section transversale méridienne du pneumatique (2), et
le rayon (Ru) de l'arc représentant la portion de transition intérieure (42), n'est pas inférieur à 5 fois et n'est pas supérieur à 20 fois le rayon (Rb) de l'arc représentant la portion de fond de rainure (36).

2. Pneumatique pour service intensif (2) selon la revendication 1, dans lequel un rapport de la largeur de rainure (WM) de la portion formant corps (30) sur la largeur de rainure maximum (WX) de la portion élargie (34) n'est pas inférieur à 0,1 et n'est pas supérieur à 0,4.

3. Pneumatique pour service intensif (2) selon la revendication 1 ou 2, dans lequel un rapport (d2/d1) d'une profondeur de rainure (d2) depuis l'ouverture de rainure (12M) jusqu'à la position (PX) à laquelle la portion élargie (30) a la largeur de rainure maximum (WX), sur une profondeur de rainure (d1) de la rainure étroite circonférentielle (38), n'est pas inférieur à 0,6 et n'est pas supérieur à 0,9.

4. Pneumatique pour service intensif (2) selon l'une quelconque des revendications 1 à 3, dans lequel un rapport (d3/d1) d'une profondeur de rainure (d3) de la portion effilée (32) sur la profondeur de rainure (d1) de la rainure étroite circonférentielle (38) n'est pas inférieur à 0,05 et n'est pas supérieur à 0,3.

5. Pneumatique pour service intensif (2) selon l'une quelconque des revendications 1 à 4, dans lequel
parmi la pluralité de portions en relief (14), une portion en relief (14) incluant un équateur ou une portion en relief (14) la plus proche de l'équateur est une portion en relief de couronne (14c), et une portion en relief (14) la plus proche de la portion en relief de couronne (14c) est une portion en relief médiane (14m),
parmi la pluralité de portions principales circonférentielles (12), une rainure principale circonférentielle (12) située entre une portion en relief médiane (14m1) sur un côté de première extrémité (TE1) de la surface de bande de roulement (6) et une portion en relief médiane (14m2) sur un côté de seconde extrémité (TE2) de la surface de bande de roulement (6) est la rainure étroite circonférentielle (38),
la portion effilée (32) de la rainure étroite circonférentielle (38) inclut des portions larges (44) au niveau desquelles l'ouverture de rainure (12M) est large et des portions étroites (46) au niveau desquelles l'ouverture de rainure (12M) est étroite, et
les portions larges (44) et les portions étroites (46) sont agencées en alternance dans une direction circonférentielle.

6. Pneumatique pour service intensif (2) selon la revendication 5, dans lequel, dans deux rainures étroites circonférentielles adjacentes (38), les portions larges (44) de la rainure étroite circonférentielle (38) sur le côté de la première extrémité (TE1) de la surface de bande de roulement (6) chevauchent la portion étroite (46) de la rainure étroite circonférentielle (38) sur le côté de la seconde extrémité (TE2) de la surface de bande de roulement (6) dans la direction axiale.

7. Pneumatique pour service intensif (2) selon l'une quelconque des revendications 1 à 6, dans lequel un rapport (Ru/Rs) du rayon (Ru) de l'arc représentant la portion de transition intérieure (42) sur le rayon (Rs) de l'arc représentant la portion de transition extérieure (40) n'est pas inférieur à 2,0 et n'est pas supérieur à 20,0.

8. Pneumatique pour service intensif (2) selon l'une quelconque des revendications 1 à 7, dans lequel un rapport (Rsw/Rsn) du rayon (Rsw) d'un arc représentant un contour de la portion de transition extérieure (40) en tant que portion faisant une transition depuis la portion large (44) jusqu'à la portion formant corps (30), sur un rayon (Rsn) d'un arc représentant un contour de la portion de transition extérieure (40) en tant que portion faisant une transition depuis la portion étroite (46) jusqu'à la portion formant corps (30), n'est pas inférieur à 0,95 et n'est pas supérieur à 1,05.

9. Pneumatique pour service intensif (2) selon l'une quelconque des revendications 1 à 8, dans lequel un rapport (WGn/WGw) d'une largeur de rainure (WGn) de la portion étroite (46) sur une largeur de rainure (WGw) de la portion large (44) n'est pas inférieur à 0,3 et n'est pas supérieur à 0,7.
